# EUROPEAN PATENT APPLICATION

(11) **EP 0 882 742 A1**
(43) Date of publication of application: **09.12.1998**
(21) Application number: 97109217.6
(22) Date of filing: 06.06.1997
(51) Int. Cl.: C08F 4/24, C08F 10/00

(54) **Production of polyethylene for blow moulding**

(71) Applicant: FINA RESEARCH S.A., B-7181 Seneffe (Feluy) (BE)
(72) Inventor: Debras, Guy, 6210 Frasnes-lez-Gosselies (BE); Bodart, Philippe, 4480 Clermont-sous-Huy (BE)

(57) **Abstract**

A process for producing high density polyethylene suitable for blow moulding, the process comprising polymerising ethylene, or copolymerising ethylene and an alpha-olefinic comonomer comprising from 3 to 10 carbon atoms, in the presence of a chromium-based catalyst, having an alumina-containing support, and a titanated surface. There is provided a catalyst system for the production of polyethylene resins by polymerisation of ethylene or copolymerisation of ethylene with an alpha-olefinic comonomer comprising from 3 to 10 carbon atoms, the catalyst system comprising a chromium-based catalyst having an alumina-containing support and a titanated surface. There is further provided the use, for improving the environmental stress crack resistance of polyethylene resins, of such a catalyst system for producing high density polyethylene suitable for blow moulding, the process comprising polymerising ethylene, or copolymerising ethylene and an alpha-olefinic comonomer comprising from 3 to 10 carbon atoms and a process for preparing such a supported chromium-based catalyst.

## Description

The present invention relates to a process for the production of polyethylene for blow moulding, a catalyst for the production of such polyethylene, and the use of such a catalyst.

Polyethylene is well known for use in the manufacture of blow moulded articles, for example bottles. It is known in the art that polyethylene resin produced for the manufacture of blow moulded articles must achieve a balance of (a) physical properties of the resin so that the resultant blow moulded article has the required physical characteristics and (b) processing properties of the resin so that the polyethylene melt may readily be processed into the blow moulded article. In order to achieve good processability of the polyethylene resins, it is desired that the flow properties and the shear response of the polyethylene are improved by broadening the molecular weight distribution of the polyethylene. Moreover, the physical properties of the solid resin when employed for blow moulding bottles require the resin to have a high density and a high environmental stress cracking resistance (ESCR).

As a general rule, a polyethylene having a higher density tends to have a higher degree of stiffness, thereby making it more suitable for blow moulding into bottles. A higher stiffness in the known polyethylene increases bottle strength and enables thinner walls to be employed. However, in general, the environment stress cracking resistance of polyethylene has an inverse relationship with stiffness. In other words, as the stiffness of polyethylene is increased, the environment stress cracking resistance decreases, and vice versa. This inverse relationship is known in the art as the ESCR-rigidity balance.
It is required, for any given bottle grade polyethylene, to achieve a compromise between the environmental stress cracking resistance of the polyethylene and the rigidity of the polyethylene employed in the blown bottle.

A number of different catalyst systems have been disclosed for the manufacture of polyethylene, in particular high density polyethylene (HDPE) suitable for blow moulding. It is known in the art that the physical properties, in particular the mechanical properties, of a polyethylene product vary depending on what catalytic system was employed to make the polyethylene. This is because different catalyst systems tend to yield different molecular weight distributions in the polyethylene produced. It is known to employ a chromium-based catalyst (*i*.*e*. a catalyst known in the art as a "Phillips catalyst)". Such a chromium-based catalyst enables the production of polyethylene having desirable physical and rheological properties.

It is known in the art to use chromium-based catalysts to polymerise HDPE and in particular to produce high density polyethylene having high resistance to environmental stress cracking. For example, EP-A-0291824, EP-A-0591968 and US-A-5,310,834 each disclose mixed catalyst compositions, incorporating chromium-based catalysts, for the polymerisation of polyethylene. Each of those prior proposals suffers from the disadvantage that mixed catalysts are required which can increase the complexity and cost of the process.

It is known in the art to provide titanium in a chromium-based catalyst. Titanium can be incorporated either into the support for the chromium catalyst or into the catalytic composition deposited on the support.

Titanium can be incorporated into the support by coprecipitation or terprecipitation as is the case for cogel and tergel type catalysts developed by Phillips Petroleum. Cogel and tergel catalysts respectively have binary and ternary supports.

Alternatively, titanium can be incorporated into the support by impregnation of the support as described for example in US-A-4,402,864 or by chemisorption of a titanium compound into the support as described for example in US-A-4,016,343.

Titanation of the catalytic composition has been disclosed in earlier patent specifications.

US-A-4,718,703 discloses that titanium can be incorporated into the catalytic composition by adding to a composite liquid suspension, of a carrier material (*i*.*e*. a support) and chromium trioxide, a titanium compound of the formula Ti(OR)₄.

US-A-4,184,979 discloses that titanium can be incorporated into the catalytic composition by adding at elevated temperature a titanium compound such as titanium tetraisopropoxide to a chromium-based catalyst which has been heated in a dry inert gas. The titanated catalyst is then activated at elevated temperature.

It is an aim of the present invention to provide a process for producing polyethylene suitable for blow moulding which employs a single chromium-based catalyst.

It is a further aim of the present invention to provide such a process for producing blow moulding grade polyethylene having a good balance of rheological and mechanical properties.

It is a yet further aim of the present invention to provide a process for producing blow moulding grade polyethylene having a good balance between the environmental stress cracking resistance and rigidity.

Accordingly, the present invention provides a process for producing high density polyethylene suitable for blow moulding, the process comprising polymerising ethylene, or copolymerising ethylene and an alpha-olefinic comonomer comprising from 3 to 10 carbon atoms, in the presence of a chromium-based catalyst, having an alumina-containing support and a titanated surface.

Preferably, the support has been subjected to a pretreatment process comprising dehydration to remove physically adsorbed water and subsequent titanation of the surface of the catalyst.

Preferably, the dehydration is carried out by heating the catalyst at a temperature of at least 300°C in an atmosphere of dry, inert gas. Preferably the titanation is carried out by titanating the chromium-based catalyst at a temperature of at least 300°C in an atmosphere of dry, inert gas containing a titanium compound of the general formula selected from RₙTi(OR')ₘ and (RO)ₙTi(OR')ₘ wherein R and R' are the same or different and are a hydrocarbyl group containing from 1 to 12 carbon atoms, n is 0 to 3, m is 1 to 4 and m+n equals 4.

Preferably, the titanated chromium-based catalyst has a titanium content of from 1 to 5 wt% based on the weight of the titanated catalyst.

Preferably, the catalyst contains from 0.75 to 6 wt% aluminium, in the alumina, based on the weight of the catalyst.

More preferably, the catalyst contains from 2 to 4 wt% aluminium, in the alumina, based on the weight of the catalyst.

The support may further comprise silica.

The catalyst may have a specific surface area of at least 275 m²/g.

The present invention further provides a catalyst system for the production of polyethylene resins by polymerisation of ethylene or copolymerisation of ethylene with an alpha-olefinic comonomer comprising from 3 to 10 carbon atoms, the catalyst system comprising a chromium-based catalyst having an alumina-containing support and a titanated surface.

The present invention also provides the use, for improving the environmental stress crack resistance of polyethylene resins, of such a catalyst system in a process for producing high density polyethylene suitable for blow moulding, the process comprising polymerising ethylene, or copolymerising ethylene and an alpha-olefinic comonomer comprising from 3 to 10 carbon atoms.

The present invention yet further provides the a process for preparing a supported chromium-based catalyst for the production of high density polyethylene, by polymerising ethylene, or copolymerising ethylene and an alpha-olefinic comonomer comprising 3 to 10 carbon atoms, which comprises the steps of: a) providing an alumina-containing support; b) depositing a chromium compound on the support to form a chromium-based catalyst; c) dehydrating the chromium-based catalyst to remove physically adsorbed water by heating the catalyst at a temperature of at least 300°C in an atmosphere of dry, inert gas; d) titanating the chromium-based catalyst at a temperature of at least 300°C in an atmosphere of dry, inert gas containing a titanium compound of the general formula selected from RₙTi(OR')ₘ and (RO)ₙTi(OR')ₘ wherein R and R' are the same or different and are hydrocarbyl groups containing from 1 to 12 carbon atoms, n is 0 to 3, m is 1 to 4 and m+n equals 4, to form a titanated chromium-based catalyst having a titanium content of from 1 to 5% by weight, based on the weight of the titanated catalyst; and e) activating the titanated catalyst at a temperature of from 500 to 900°C.

The present invention is predicated on the surprising discovery by the present inventor that the use of the combination of a particular catalyst system comprising a chromium-based catalyst, having an alumina-containing support, and a titanated surface, can produce a blow moulding grade polyethylene exhibiting improved mechanical properties, in particular an improved ESCR-rigidity balance, than other chromium-based catalysts.

The improved processing performance results from broadening the molecular weight distribution and thus increasing the shear response, while maintaining the same good ESCR-rigidity balance.

The preferred chromium-based catalyst comprises chromium oxide on a silica-alumina support. The support preferably comprises from 0.75 to 6 wt% aluminium, more preferably from 2 to 4 wt% aluminium, most preferably around 2 wt% aluminium, based on the weight of the chromium-containing catalyst. The catalyst preferably comprises at least 0.5 wt% chromium, more preferably from 0.5 to 5 wt% chromium, most preferably around 1 wt%, based on the weight of the chromium-containing catalyst The catalyst may have a specific surface area of from 200 to 700 m²/g, preferably from 275 to 500 m²/g, most preferably around 350 m²/g and a volume porosity of greater than 1 cc/g preferably from around 1.5 to 3 cc/g, most preferably around 2.5 to 2.7 cc/g. Particularly preferred catalysts have a pore volume of at least 2.5 cc/g and a specific surface area of at least 275 m²/g.

A particularly preferred chromium-based catalyst for use in the present invention comprises the catalyst sold in commerce under the trade name C34340MS by the company PQ Corporation. This catalyst has the following properties: a support of SiO₂ and Al₂O₃ having around 2.1 wt% Al, a pore volume of 2.7 cc/g and a specific surface area of 360 m²/g. An alternative preferred chromium-based catalyst for use in the invention comprises the catalyst sold in commerce under the trade name EP241 by the company Crosfield. This catalyst has the following properties: a support of SiO₂ and Al₂O₃ having around 0.76 wt% Al₂, a chromium content of around 0.5 wt%, a pore volume of 2.5 cc/g and a specific surface area of 288 m²/g.

The chromium-based catalyst is subjected to a pretreatment in order to dehydrate it by driving off physically adsorbed water from the silica-alumina support *i*.*e*. chemically adsorbed water in the form of hydroxide (-OH) groups bonded to the -Si-O-framework of the support need not be removed. The removal of physically adsorbed water avoids the formation of TiO₂ as a product from the reaction of water with the titanium compound subsequently introduced during he titanation procedure, as described below. The dehydration step is preferably carried out by heating the catalyst to a temperature of at least 300°C in a fluidised bed and in a dry inert atmosphere of, for example, nitrogen. The dehydration step is preferably carried out for 0.5 to 2 hours.

The dehydrated catalyst is then subjected to a titanation step at elevated temperature preferably in the fluidised bed, also in an inert atmosphere, in which a titanium-containing compound decomposes at the elevated temperature to deposit titanium onto the surface of the catalyst. The titanium compound may be of the formula RₙTi(OR')ₘ or (RO)ₙTi(OR')ₘ where R and R' are the same or different and can be any hydrocarbyl group containing 1 to 12 carbon atoms, n is 0 to 3, m is 1 to 4 and m+n equals 4. Preferably, the titanium compound is a titanium tetraalkoxide Ti(OR')₄ where R' can be an alkyl or a cycloalkyl group each having from 3 to 5 carbon atoms. The titanation is performed by progressively introducing the titanium compound into the stream of dry, inert non-oxidising gas described hereabove in the dehydration step, maintained at at least 300°C. Preferably, the titanium compound is pumped as a liquid into the reaction zone where it is vapourised. This titanation step is controlled so that the titanium content of the resultant catalyst is preferably from 1 to 5% by weight, and preferably from 2 to 4% by weight, based on the weight of the titanated chromium-based catalyst. The total amount of titanium compound introduced into the gas stream is calculated in order to obtain the required titanium content in the resultant catalyst and the progressive flow rate of the titanium is adjusted in order to provide a titanation reaction period of 0.5 to 1 hour.

After the introduction of the titanium compound has been terminated at the end of the reaction period, the catalyst is flushed under the gas stream for a period of typically 0.75 hours.

The dehydration and titanation steps are performed in the vapour phase in a fluidised bed.

Without being bound by theory, it is believed that the titanium is chemically bonded to the -Si-O- framework of the support.

The chromium-based catalyst is preferably activated at an elevated temperature, preferably at a temperature from 500 to 900°C, more preferably from 550 to 750°C, most preferably around 650°C.

In the preferred process of the present invention, the polymerisation or copolymerisation process is carried out in the liquid phase in which ethylene, and for copolymerisation an alpha-olefic comonomer comprising from 3 to 10 carbon atoms, are present in an inert diluent. The comonomer may be selected from 1-butene, 1-pentene, 1-hexene, 4-methyl 1-pentene, 1-heptene and 1-octene. The inert diluent is preferably isobutane. The polymerisation or copolymerisation process is typically carried out at a temperature of from 85 to 110°C, preferably from 95 to 105°C. The polymerisation or copolymerisation process is preferably carried out at a pressure of from 20 to 45 bar, preferably from 40 to 42 bars. Typically, in the polymerisation process the ethylene, monomer comprises from 0.5 to 8% by weight, typically around 6% by weight of the total weight of the ethylene in the inert diluent. Typically, in the copolymerisation process ethylene comonomer comprises 0.5 to 6% by weight and the comonomer comprises from 0.5 to 3% by weight, based on the total weight of the ethylene monomer and comonomer in the inert diluent.

In the process of the present invention, the titanated and activated chromium-based catalyst is introduced into the polymerisation reactor. Alkylene monomer and where appropriate comonomer are fed into the polymerisation reactor in the inert diluent and hydrogen gas is also introduced into the polymerisation reactor. The polymerisation product of high density polyethylene is discharged from the reactor and separated from the diluent which can then be recycled.

The polyethylene resins produced in accordance with the process of the invention have physical properties making them particularly suitable for use as blow moulding grade polyethylenes. In particular, the process of the present invention can produce polyethylene resins in pellet form having a high load melt index (HMLI) ranging from around 2 g/10' and a melt index (MI₂) ranging from 0.02 to 0.5 g/10' . Both the high load melt index HMLI and the melt index MI₂ were determined during the procedures of ASTM D 1238 using respective loads of 21.6kg and 2.16kg at a temperature of 190°C. Moreover, the shear response, which is a ratio between the HLMI and MI₂ values and is representative of the processability of the polyethylene resins produced in accordance with the process of the invention, can vary, from 80 to 200.

The process of the present invention also can produce polyethylene resins having a good compromise between the ESCR and rigidity. The Bell ESCR (50°C 100% antarox) was measured in accordance with ASTM D-1693-70, Procedure B.

The present invention will now be described with reference to the following non-limiting Examples.

In order to demonstrate the preferred processes of the present invention in which a chromium-based catalyst was employed to polymerise polyethylene a number of runs to copolymerise ethylene to form high density polyethylene were performed.

### Example 1

In each of the Examples, a liquid comprising ethylene, 1-hexene and the balance isobutane as an inert diluent was fed into a polymerisation reaction zone at a pressure of 38 to 42 bars and at a polymerisation temperature of around 90 to 94 °C. Hydrogen was also fed into the polymerisation reaction zone. In Example 1, the catalyst system comprised the chromium-based catalyst C34340 which had been subjected to a pretreatment comprising dehydration, titanation and activation.

The dehydration, titanation and activation steps were carried out as follows. The chromium-based catalyst was introduced into an activator vessel incorporating a fluidised bed, flushed under nitrogen and the temperature was raised from room temperature to 300°C. The dehydration step was then carried out at this elevated temperature for 2 hours. After the dehydration step, titanium tetraisopropoxide, stored under anhydrous nitrogen, was progressively injected into the bottom of the activator vessel incorporating the fluidised bed. The amount of titanium tetraisopropoxide injected was calculated in order to give the required titanium content in the resultant catalyst and the flow thereof was adjusted in order to continue the injection to complete the desired level of titanation in around 30 minutes. After the injection was completed, the catalyst was flushed under nitrogen for around 45 minutes. Nitrogen was then progressively switched to air and the temperature was raised to the activation temperature of around 650°C for the subsequent activation step 1. In the activation step, the titanated chromium-based catalyst was maintained at the activation temperature for 6 hours. At the end of the activation step, the temperature was progressively decreased to 350°C. At continued cooling from 350°C to room temperature, the catalyst was flushed under nitrogen.

The polymerisation conditions and the properties of the resultant polyethylene products are summarised in Table 1.

### Comparative Example 1

Comparative Example 1 was performed with the same catalyst C34340 but without any dehydration and subsequent titanation of the catalyst. Instead, an alkyl boron, in particular triethylboron (TEB), was added to the catalyst. The TEB was introduced into the polymerisation reactor in the inert diluent and comprised 0.6 ppm based on the weight of the inert diluent. The TEB was employed for the purpose of increasing the activity of the catalyst thereby to increase processing yields. It will be seen that Comparative Example 1 yielded polyethylene pellets having a Bell ESCR (50° 100% antarox) of 78 hours but with a similar HMLI and density as for Example 1.

A comparison between the Bell ESCR values of Example 1 and Comparative Example 1 clearly demonstrates that the use of an alumina-containing support in combination with a titanated surface instead of organoboron compound can provide good environmental stress crack resistance to a polyethylene resin.

Without being bound by theory it is believed that for a chromium-based catalyst having a silica-containing support, the provision of alumina in the support provides a high molecular weight fraction for the polyethylene resin. The dehydration and titanation of the catalyst to give a titanated surface in turn provides a good low molecular weight fraction yielding for the polyethylene resin as a whole a broad molecular weight distribution. This in turn provides the polyethylene resin with the property of good environmental stress crack resistance. In contrast to Comparative Example 1 which employed TEB to produce a low molecular weight fraction, it may be seen that for Comparative Example 1 and Example 1 the HLMI and density of the polyethylene resins produced therefrom have substantially the same values, the use of titanation in the catalyst of the invention gave unexpectedly improved environment stress crack resistance as compared to the use of substantially the same catalyst but with addition of TEB instead of a pretreatment involving dehydration and titanation in accordance with the invention.

**TABLE 1**

| | Example 1 | Comparative Example 1 |
|---|---|---|
| Catalyst Type | C34340 | C34340 |
| Activation Temp.(°C) | 650 | 650 |
| Ti Wt% | 3 | 0 |

| COPOLYMERISATION CONDITIONS | | |
|---|---|---|
| Temperature (°C) | 102 | 103 |
| TEB (ppm) | 0 | 0.6 |
| Ethylene (kg/h) | 9 | 9 |
| 1-hexene (cc/h) | 62 | 51 |
| Hydrogen (N1/h) | 5 | 18 |
| Isobutane (kg/h) | 26 | 26 |

| PROPERTIES OF POLYETHYLENE PELLETS | | |
|---|---|---|
| HLMI (g/10 ) | 23.3 | 23.2 |
| MI2 (g/10 ) | 0.23 | 0.20 |
| Shear Response | 100 | 116 |
| Density (g/cc) | 0.9577 | 0.9572 |
| ESCR F50 | | |
| Bell 50°C 100% (h) | 114 | 78 |

## Claims

1. A process for producing high density polyethylene suitable for blow moulding, the process comprising polymerising ethylene, or copolymerising ethylene and an alpha-olefinic comonomer comprising from 3 to 10 carbon atoms, in the presence of a chromium-based catalyst, having an alumina-containing support, and a titanated surface.

2. A process according to claim 1 wherein the support has been subjected to a pretreatment process comprising dehydration to remove physically adsorbed water and subsequent titanation of the surface of the catalyst.

3. A process according to claim 2 wherein the dehydration is carried out by heating the catalyst at a temperature of at least 300°C in an atmosphere of dry, inert gas.

4. A process according to any one of claims 1 to 3 wherein the titanation is carried out by titanating the chromium-based catalyst at a temperature of at least 300°C in an atmosphere of dry, inert gas containing a titanium compound of the general formula selected from RₙTi(OR')ₘ and (RO)ₙ Ti(OR')ₘ wherein R and R' are the same or different and are hydrocarbyl groups containing from 1 to 12 carbon atoms, n is 0 to 3, m is 1 to 4 and m+n equals 4.

5. A process according to any foregoing claim further comprising activating the titanated chromium-based catalyst at an activation temperature of from 500 to 900°C.

6. A process according to any foregoing claim wherein the titanated chromium-based catalyst has a titanium content of from 1 to 5 wt% based on the weight of the titanated catalyst.

7. A process according to any foregoing claim wherein the catalyst contains from 0.75 to 6 wt% aluminium, in the alumina-containing support, based on the weight of the catalyst.

8. A process according to claim 7 wherein the catalyst contains from 2 to 4 wt% aluminium, in the alumina-containing support, based on the weight of the catalyst.

9. A process according to any foregoing claim wherein the catalyst contains at least 0.5 wt% chromium, based on the weight of the catalyst.

10. A process according to any foregoing claim wherein the catalyst has a pore volume of at least 2.5 cc/g and a specific surface area of at least 275 m²/g.

11. A catalyst system for the production of polyethylene resins by polymerisation of ethylene or copolymerisation of ethylene with an alpha-olefinic comonomer comprising from 3 to 10 carbon atoms, the catalyst system comprising a chromium-based catalyst having an alumina-containing support and a titanated surface.

12. A catalyst system according to claim 11 wherein the titanated chromium-based catalyst has a titanium content of from 1 to 5 wt% based on the weight of the titanated catalyst.

13. A catalyst system according to claim 11 or claim 12 wherein the catalyst contains from 0.75 to 6 wt% aluminium, in the alumina-containing support, based on the weight of the catalyst.

14. A catalyst system according to any one of claims 11 to 13 wherein the catalyst contains from 2 to 4 wt% aluminium, in the alumina-containing support, based on the weight of the catalyst.

15. A catalyst system according to any one of claims 11 to 14 wherein the catalyst contains at least 0.5 wt% chromium, based on the weight of the catalyst.

16. A catalyst system according to any one of claims 11 to 15 wherein the catalyst has a pore volume of at least 2.5 cc/g and a specific surface area of at least 275 m²/g.

17. Use, for improving the environmental stress crack resistance of polyethylene resins, of a catalyst system according to any one of claims 11 to 16 in a process for producing high density polyethylene suitable for blow moulding, the process comprising polymerising ethylene, or copolymerising ethylene and an alpha-olefinic comonomer comprising from 3 to 10 carbon atoms.

18. A process for preparing a supported chromium-based catalyst for the production of high density polyethylene, by polymerising ethylene, or copolymerising ethylene and an alpha-olefinic comonomer comprising 3 to 10 carbon atoms, which comprises the steps of:
a) providing an alumina-containing support;
b) depositing a chromium compound on the support to form a chromium-based catalyst;
c) dehydrating the chromium-based catalyst to remove physically adsorbed water by heating the catalyst at a temperature of at least 300°C in an atmosphere of dry, inert gas;
d) titanating the chromium-based catalyst at a temperature of at least 300°C in an atmosphere of dry, inert gas containing a titanium compound of the general formula selected from RₙTi(OR')ₘ and (RO)ₙTi(OR')ₘ wherein R and R' are the same or different and are hydrocarbyl groups containing from 1 to 12 carbon atoms, n is 0 to 3, m is 1 to 4 and m+n equals 4, to form a titanated chromium-based catalyst having a titanium content of from 1 to 5% by weight, based on the weight of the titanated catalyst; and
e) activating the titanated catalyst at a temperature of from 500 to 900°C.

19. A process according to claim 18 wherein the support has a specific surface area of at least 275 m²/g.

20. A process according to claim 18 or claim 19 wherein the titanium compound is a tetraalkoxide of titanium having the general formula Ti(OR')ₘ wherein R' is selected form an alkyl and a cycloalkyl each having from 3 to 5 carbon atoms.

21. A process according to any one of claims 18 to 20 wherein the titanium content of the titanated catalyst is from 2 to 4 % by weight, based on the weight of the titanated catalyst.

22. A process according to any one of claims 18 to 21 wherein the chromium compound is chromium oxide and the chromium content ranges from 0.5 to 1.5% by weight, based on the weight of the chromium-based catalyst prior to titanation.

23. A process according to any one of claims 18 to 22 wherein the catalyst contains from 0.75 to 6 wt% aluminium, in the alumina-containing support, based on the weight of the catalyst.

24. A process according to claims 18 to 23 wherein the catalyst contains from 2 to 4 wt% aluminium, in the alumina-containing support based, on the weight of the catalyst.
